# EUROPÄISCHE PATENTSCHRIFT

(11) **EP 1 417 433 B1**
(45) Veröffentlichungstag und Bekanntmachung des Hinweises auf die Patenterteilung: **09.11.2005**
(21) Anmeldenummer: 02794500.5
(22) Anmeldetag: 03.07.2002
(51) Int. Cl.: F16K 31/06

(54) **ELEKTROMAGNETVENTIL**
SOLENOID VALVE
VANNE ELECTROMAGNETIQUE

(30) Priorität: 06.08.2001 DE 10137715; 06.08.2001 DE 10137716; 06.08.2001 DE 10137714; 05.11.2001 DE 10154257
(43) Veröffentlichungstag der Anmeldung: 12.05.2004
(73) Patentinhaber: Continental Teves AG & Co. oHG, 60488 Frankfurt (DE)
(72) Erfinder: VOLZ, Peter, 64291 Darmstadt (DE)
(86) Internationale Anmeldenummer: PCT/EP2002/007318
(87) Internationale Veröffentlichungsnummer: WO 2003/014607

(56) Entgegenhaltungen:
- EP-A- 0 829 668
- DE-A- 10 016 599
- DE-A- 19 502 671
- DE-A- 19 961 978
- US-A- 4 813 647

## Beschreibung

Die Erfindung betrifft ein Elektromagnetventil nach dem Oberbegriff des Patentanspruchs 1.

Aus der DE 100 16 599 A1 ist bereits ein Elektromagnetventil bekannt, das für die analoge Betätigung im Luftspalt zwischen dem Magnetkern und dem Magnetanker ein Federelement aufweist, das infolge der gewählten Lage nicht justiert werden kann. Ferner beschränkt die gewählte Anordnung des Federelements die Gestaltungsfreiheit für den Luftspalt. Da die für die Magnetkraft und das Federelement charakteristischen Kennlinien durch die Herstellungstoleranzen der Einzelteile erheblich beeinflußt werden, bedarf es einer äußerst präzisen mechanischen Fertigung oder dem Einsatz von Drucksensoren und komplexen elektronischen Regelkreisen, um die gewünschte Ventilcharakteristik einstellen zu können.

Ferner ist aus DE 199 61 978 A1 ein Elektromagnet bekannt, der zwischen seiner Rückschlussplatte und einer die Rückschlussplatte zum Magnetkern positionierenden Rückstellfeder eine weitere Feder aufweist, welche die als Scheibenfeder ausgeführte Rückstellfeder im Bereich ihres Innenumfangs in Anlage an einem Bund hält, der an einem die Rückschlussplatte aufweisenden Stift verstellbar ausgebildet ist. Die weitere Feder hat ausschließlich die Aufgabe, die Rückstellfeder am Bund zu halten. Die Ventilkennlinie ist ausschließlich durch die Wirkung des Bunds auf die Rückstellfeder bebeeinflußbar.

In der gattungsbildenden US-A-4 813 647 ist ein elektromagnetischer Aktuator beschrieben, der zwischen einem Magnetkern und einem Magnetanker eine Feder aufweist, sowie mit einem weiteren plattenförmigen Federelement, dessen eine Ende am Gehäuse des Aktuators fixiert ist, während das andere Ende des plattenförmigen Federelements zwischen dem Magnetanker und einem vom Magnetanker zu betätigenden Stößel eingespannt ist. Das plattenförmige Federelement trägt in der elektromagnetisch nicht erregten Stellung des Aktuators ausschließlich zur Grundpositionierung des Magnetankers bei.

Es ist die Aufgabe der vorliegenden Erfindung, ein Elektromagnetventil der gattungsbildenden Art derart zu verbessern, dass unter Beibehaltung eines möglichst einfachen Aufbaus eine besonders einfache Einjustierung eines zur analogen Ventilbetätigung verwendbaren Federelements gewährleistet ist.

Diese Aufgabe wird erfindungsgemäß für ein Elektromagnetventil der angegebenen Art mit den kennzeichnenden Merkmalen des Patentanspruchs 1 gelöst.

Weitere Merkmale, Vorteile und Anwendungsmöglichkeiten der Erfindung werden im folgenden anhand mehrerer Zeichnungen erläutert.

Es zeigen
- Fig. 1: einen Längsschnitt durch ein in der Grundstellung stromlos offenes Elektromagnetventil mit den Merkmalen der Erfindung,
- Fig. 2: einen vergrößerten Längsschnitt des in Figur 1 gezeigten Anschlags mit planarer Stirnfläche, auf der ein als Tellerfeder ausgeführtes Federelement ruht,
- Fig. 3: einen vergrößerten Längsschnitt eines Anschlags mit trichterförmiger Stirnfläche, auf der ein als planare Ringscheibe ausgeführtes Federelement ruht,
- Fig. 4: einen Längsschnitt durch ein in der Grundstellung stromlos geschlossenes Elektromagnetventil mit einem Federelement, das zwischen einem das Ventilgehäuse verschliessenden Magnetkern und einer am Magnetkern befestigten Kappe eingespannt ist, welche die Funktion des Anschlags übernimmt,
- Fig. 5-7: Ausgestaltungsvarianten bezüglich der in der Figur 5 vorgestellten Kappe.

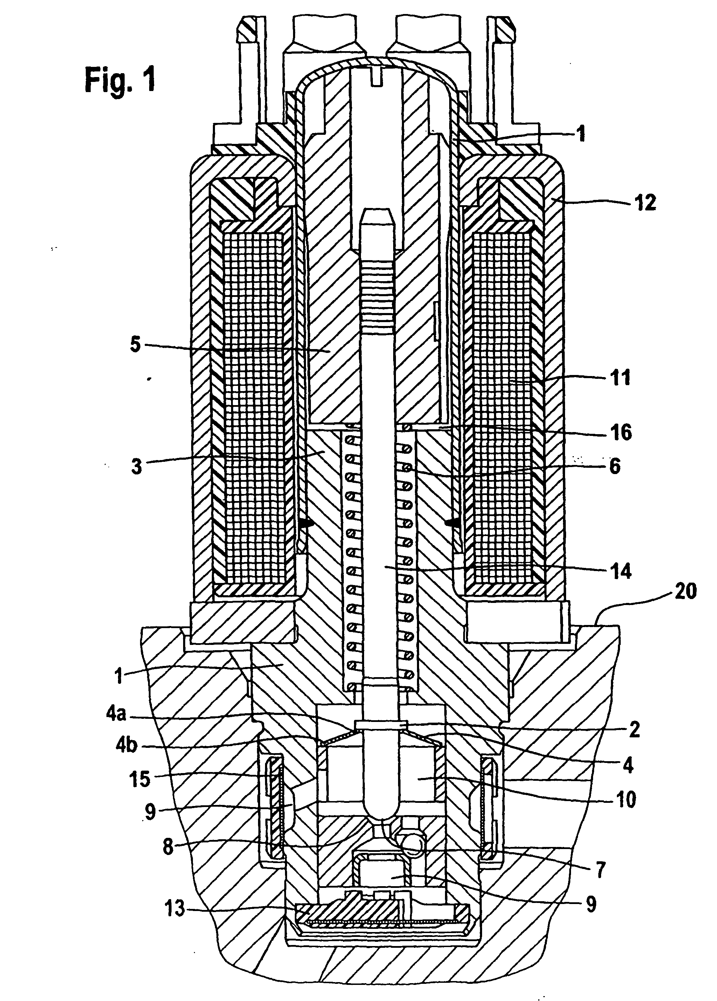

Die Figur 1 zeigt einen vergrößerten Längsschnitt durch ein in der Grundstellung stromlos offenes Elektromagnetventil. Das Elektromagnetventil ist insbesondere für die Verwendung in Kraftfahrzeug-Bremsschlupfregelsystemen geeignet. Zu diesem Zweck mündet von unten in das Ventilgehäuse 1 ein mit einem Bremsdruckgeber verbundener erster Druckmittelkanal 9 ein, der in der geöffneten Ventilschaltstellung mit einem seitlich aus dem Ventilgehäuse 1 austretenden zweiten Druckmittelkanal 9 verbunden ist, der zu einer Radbremse führt. Das Elektromagnetventil weist im Wesentlichen ein aus Tiefzieh- und Drehteilen gefertigtes zweiteiliges Ventilgehäuse 1 auf, in dem ein Ventilschließglied 7 an einem Ventilstössel 14 beweglich geführt ist. Am Ventilstössel 14 ist ein Magnetanker 5 angeordnet, der in Abhängigkeit von der elektromagnetischen Erregung einer am Ventilgehäuse 1 angebrachten Ventilspule 11 eine Hubbewegung in Richtung eines im Unterteil des Ventilgehäuses 1 integrierten Magnetkerns 3 vollzieht. Eine Feder 6 mit einer linearen Kraft/Wegkennlinie positioniert in der elektromagnetisch nicht erregten geöffneten Ventilstellung den Magnetanker 5 in einem definierten Axialabstand vom Magnetkern 3, so dass der Magnetanker 5 vom Magnetkern 3 durch einen Luftspalt 16 getrennt ist. Die Feder 6 stützt sich als Schraubenfeder in einer Stufenbohrung des Magnetkerns 3 ab. Der Magnetkern 3 bildet somit in vorliegendem Beispiel ein mit dem Unterteil des zweiteiligen Ventilgehäuses 1 einteilig ausgeführtes hohles Drehteil. Ebenso können auch der Magnetkern 3 und das Unterteil des Ventilgehäuses 1 als separate Teile in Dreh-, Tiefzieh- oder Kaltschlagtechnik ausgeführt werden. Außer der Feder 6 ist ein Federelement 4, welches einen nicht linearen, vorzugsweise progressive Federkennlinie aufweist und welches dem elektromagnetisch initiierten Hub des Magnetankers 5 ebenso wie die Feder 6 entgegenwirkt, gleichfalls im Unterteil des in einem blockförmigen Ventilträger 3 eingestemmten Ventilgehäuses 1 angeordnet. Um eine möglichst einfache Justierung des Federelements 4 im eingebauten Zustand zu gewährleisten, stützt sich das Federelement 4 mit seinem ersten Federende 4a am Ventilstössel 14 und mit seinem zweiten Federende 4b an einem Anschlag 10 im Ventilgehäuse 1 ab. Das erste Federende 4a liegt an einem am Ventilstössel 14 angebrachten Absatz 2 an, der abbildungsgemäß im erweiterten Bereich der Stufenbohrung als Ringteil radial hervorsteht.

Selbstverständlich kann der Absatz 2 auch als am Ventilstössel 14 abgesetzte Stösselstufe oder auch durch eine Ringnut realisiert sein. Der unterhalb des Federelements 4 angeordnete Anschlag 10 ist innerhalb des erweiterten Bereichs der Stufenbohrung in Richtung der Ventillängsachse variabel einstellbar, um eine exakte Einjustierung der Vorspannkraft des Federelements 4 zu ermöglichen. Der Anschlag 10 ist als eine in der Stufenbohrung des Ventilgehäuses 1 verschiebbare Buchse ausgeführt, durch die sich der Ventilstössel 14 mit dem am Stösselende angeformten Ventilschließglied 7 koaxial nach unten in Richtung auf einen Ventilsitz 7 erstreckt, der gleichfalls zu Einstellzwecken in einem in der Stufenbohrung axial verschiebbaren Buchsenteil angeordnet ist. Das Buchsenteil weist ein in einen Bypasskanal eingesetztes Rückschlagventil und koaxial zum Ventilsitz 8 in der Ventilsitzöffnung eine Blende auf.

Alternativ zur bisher beschriebenen Ausführung und Anordnung des Federelements 4 kann zur Einjustierung des Federelements 4 auch der Absatz 2 als ein auf dem Ventilstössel 14 verschiebbares Ringteil ausgeführt sein, so dass sich das Federelement 4 mit seinem vom Absatz 2 abgewandten zweiten Federende 4b dann allerdings an einem festen Anschlag 10 im Ventilgehäuse 1 abstützen würde.

Zur Erzielung einer nicht linearen Federkennlinie ist das Federelement 4 als Ringscheibe ausgeführt, deren erstes Federende 4a der in der Ringscheibenmitte gelegene Profilinnenkante und deren zweites Federende 4b der entlang dem Ringscheibenumfang verlaufende Profilaußenkante entspricht.

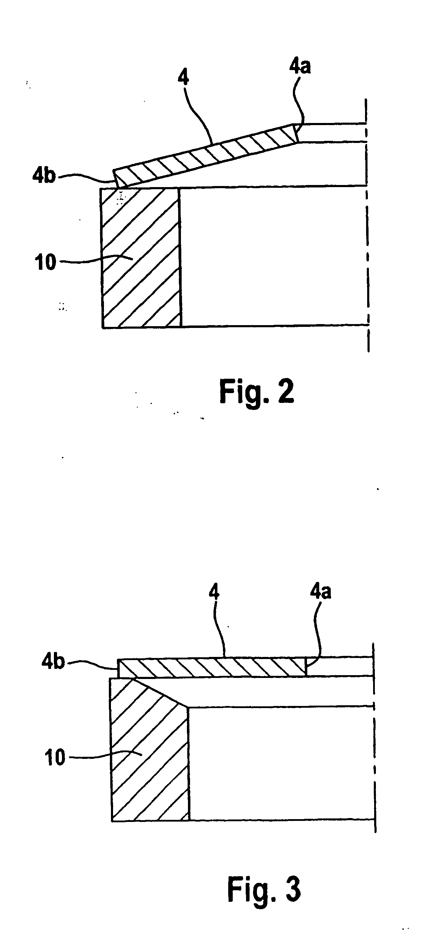

In den Figuren 1 und 2 ist das Federelement 4 beispielhaft als Tellerfeder ausgeführt, deren erstes Federende 4a als in der Tellerfedermitte gelegene Profilinnenkante am Absatz 2 des Ventilstössels 14 anliegt, während sich das zweite Federende 4b als entlang dem Tellerfederumfang verlaufende Profilaußenkante geneigt auf einer ebenen Stirnfläche des Anschlags 2 abstützt. Damit verbleibt zwischen dem von der ebenen Stirnfläche abstehenden Tellerfederbereich und dem Anschlag 10 ein hinreichend großer Federweg, der mindestens so groß ist wie der Hub des Ventilstössels 14.

Die Verwendung einer Tellerfeder oder eines Tellerfederpaketes hat den Vorteil, dass sich die Herstellung des als Einstellbuchse ausgeführten Anschlags 10 vereinfacht, da die dem Federelement 4 zugewandte Stirnfläche lediglich planar zu gestalten ist.

Alternativ zu den Abbildungen nach den Figuren 1 und 2 wird in der Figur 3 ein als ebene Federscheibe ausgeführtes Federelement 4 vorgestellt. Die dem Federelement 4 zugewandte Stirnfläche des Anschlags 10 ist in Richtung der Ventillängsachse trichterförmig geneigt, wobei das zweite Federende 4b des Federelement 4 am erhabenen, äußeren Bereich der Stirnfläche des Anschlags 10 anliegt, um bei der Abwärtsbewegung des Ventilstössels 14 in Richtung des Trichters so weit durchfedern zu können, dass das Ventilschließglied 7 am Ventilsitz 8 zur Anlage gelangt.

Die nicht weit entfernt vom Ventilschließglied 7 gewählte Anordnung des Federelements 4 begünstigt die Zentrierung des Ventilstössel 14 in Richtung des Ventilsitzes 8, so dass ein seitlicher und zur Undichtigkeit führender Versatz des Ventilschließgliedes 7 beim Auftreffen auf den Ventilsitz 8 verhindert wird.

Nachfolgend wird die Montage und die Einstellung der einzelnen Bauteile für das aus Figur 1 bekannte Elektromagnetventil beschrieben.
In das aus Automatenstahl gedrehte Unterteil des Ventilgehäuses 1 wird der Ventilstössel 14 mit der Feder 6 von oben eingeführt. Der Ventilstössel 14 ist entweder gemäß der Figur 1 mit dem Magnetanker 5 zu einer Baueinheit zusammengefügt oder er liegt als Losteil lediglich an der Stirnfläche des Magnetankers 5 an. Das als Tiefziehteil domförmig ausgeführte Oberteil des Ventilgehäuses 1 wird auf den rohrförmigen, den Magnetkern 3 bildenden Abschnitt des Ventilgehäuseunterteils aufgeschoben. Danach wird eine Magnetscheibe und die Ventilspule 11 mit einem Jochring auf das Unterteil des Ventilgehäuses 1 aufgesetzt.
Zur Einstellung des zwischen dem Magnetanker 5 und dem Magnetkern 3 erforderlichen Restluftspalts wird zunächst die Ventilspule 11 mit dem gewünschten Nennstrom erregt, so dass der Magnetanker 5 am Magnetkern 3 zur Anlage gelangt. Danach wird von unten in das Unterteil des Ventilgehäuses 1 eine Kraftwegmesseinrichtung eingeführt, die gegen das Ventilschließglied 7 drückt und über den Ventilstössel 14 den Magnetanker 5 um den gewünschten Restluftspalt vom Magnetkern 3 abhebt. Das domförmige Oberteil des Ventilgehäuses 1 folgt zwangsläufig dem Einstellhub des Magnetankers 5 und nimmt seine Endposition ein, in der das Oberteil des Ventilgehäuses 1 mit dem Unterteil des Ventilgehäuses 1 im Bereich des Magnetkerns 3 verschweißt wird.

Anschließend wird bei unveränderter Erregung der Ventilspule 11 von unten in die Stufenbohrung des Ventilgehäuseunterteils das Federelement 4 eingeführt, dem der Anschlag 10 folgt, der unter Zuhilfenahme einer Kraftmesseinrichtung so weit in den erweiterten Bereich der Stufenbohrung eingepresst wird, bis sich über die Wirkung des Federelements 4 am Ventilschließglied 7 die gewünschte Nennschließkraft einstellt. Damit ist auch die Einstellung des Federelements 4 abgeschlossen.

Danach wird die den Ventilsitz 8 aufweisende Ventilplatte von unten in die Stufenbohrung des Ventilgehäuses 1 so weit in Richtung auf den unterhalb des Anschlags 10 hervorstehenden Ventilstössel 14 eingepresst, dass unter der Wirkung des Nennstroms der Ventilspule 11 das Ventilschließglied 7 die Öffnung im Ventilsitz 8 gerade so verschliessen kann. Diese Schließposition kann beispielsweise mittels einer Messung des Volumenstroms bzw. pneumatischen Druckabfalls am Ventilsitz 8 geschehen.
Nach diesem Einstellschritt sind gemäß der Figur 1 die Filterelemente am Ventilgehäuse 1 im Bereich der Druckmittelkanäle 9 zu befestigen. Als letzter Montageschritt erfolgt das Einpressen des Elektromagnetventils in den Ventilträger 7.

Abweichend vom Aufbau des Elektromagnetventils nach Figur 1 wäre auch eine Fixierung des Federelements 4 unterhalb des Ventilsitzes 8 denkbar, dessen Federkraft über einen durch die Öffnung des Ventilsitzes 8 ragenden Stift auf das Ventilschließglied 7 eingeleitet werden könnte. Diese Anordnung erfordert allerdings auch eine Änderung der Strömungsquerschnitte im Bereich der Ventilsitzöffnung, um ein Anwachsen des Strömungswiderstands zu verhindern, was wiederum Einfluß auf die Kräftebilanz nimmt, so dass diese vorgestellte Variante nur am Rande erwähnt werden soll.

Die in der Figur 1 gezeigte Einbaulage des Federelements 4 ermöglicht überdies die völlige Gestaltungsfreiheit vom Magnetkern 3 und Magnetanker 5 im Bereich des Luftspalts 16, wodurch sich vorteilhafte Möglichkeiten zur Verhinderung des durch Remanenz hervorgerufenen Magnetankerklebens ergeben. Dies kann auf konventionelle Weise durch die Anordnung einer unmagnetischen Scheibe im Luftspalt 16 oder durch entsprechende Formgebung der aufeinander gerichteten Magnetanker- als auch Magnetkernstirnflächen erfolgen. Ferner ermöglicht die gewählte Einbaulage des Federelements 4 außerhalb (oberhalb) des Strömungsfeldes in der geöffneten Stellung des Ventilschliessgliedes 7 eine ungehinderte Druckmittelverbindung zwischen den oberhalb und unterhalb des Ventilsitzes 8 im Ventilgehäuse 1 angeordneten Druckmittelkanäle 9.

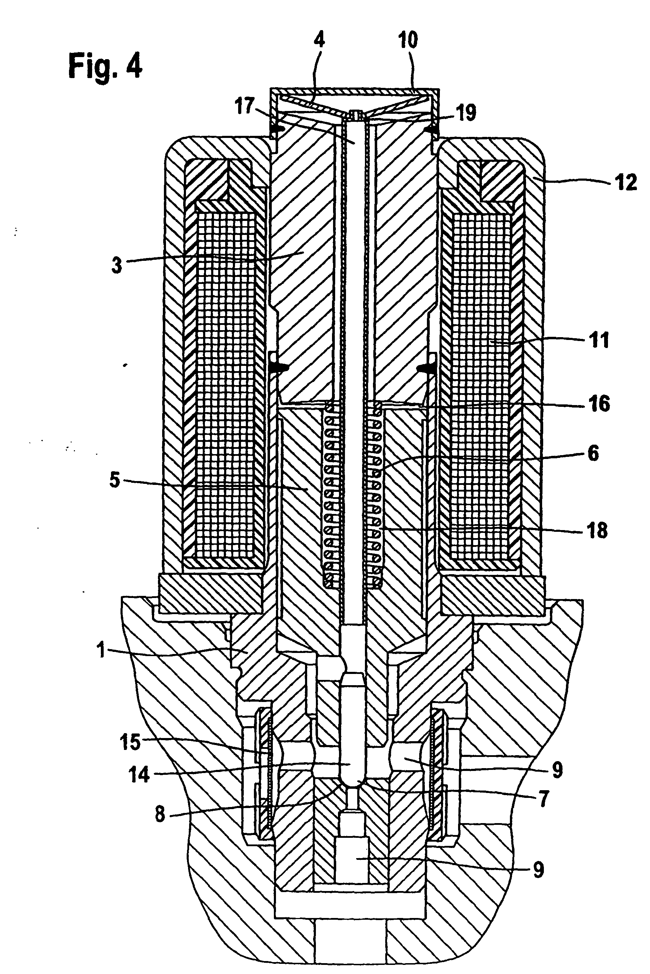

Eine weitere zweckmäßige Anordnung des Federelements 4 in einem in Grundstellung geschlossenen Elektromagnetventil geht aus der Figur 4 hervor.

Die Figur 4 zeigt den für das Federelement 4 erforderlichen Anschlag 10 als Kappe an der äußeren Stirnfläche des Magnetkerns 3 angeordnet. Das als Tellerfeder ausgeführte Federelement 4 ist im Inneren der aus Dünnblech gefertigten Kappe, d.h. zwischen dem Boden der Kappe und einem in die Kappe ragenden Kraftübertragungsglied 17 eingespannt. Diese Kraftübertragungsglied 17 erstreckt sich als Stösselrohr durch eine Öffnung 18 des rohrförmigen Magnetkerns 3 in den gleichfalls rohrförmigen Magnetanker 5. Das vom Federelement 4 abgewandtes Ende des Stösselrohrs ist in einer Stufenbohrung des Magnetankers 5 eingepresst. Die Feder 6 ist als Schraubenfeder mit linearer Federkennlinie über das Stösselrohr gestülpt und stützt sich zwischen der Stufenbohrung des Magnetankers 5 und dem Magentkern 3 ab. Der dem Federelement 4 zugewandte Endabschnitt des Stösselrohrs weist zur Zentrierung und Abstützung des Federelements 4 eine Stufe 19 auf, an der sich der verjüngte Endabschnitt des Stösselrohrs anschließt und sich in die Öffnung des Federelements 4 erstreckt.

Die exakte Einstellung der Vorspannkraft des progressiven Federelements 4 erfolgt durch das vertikale Verschieben des kappenförmigen Anschlags 10 entlang dem oberen Endbereich des Magnetkerns 3. Nach exakter Einstellung wird die Kappe mittels einer Umfangs-Schweißnaht druckmitteldicht am Magnetkern 3 befestigt.

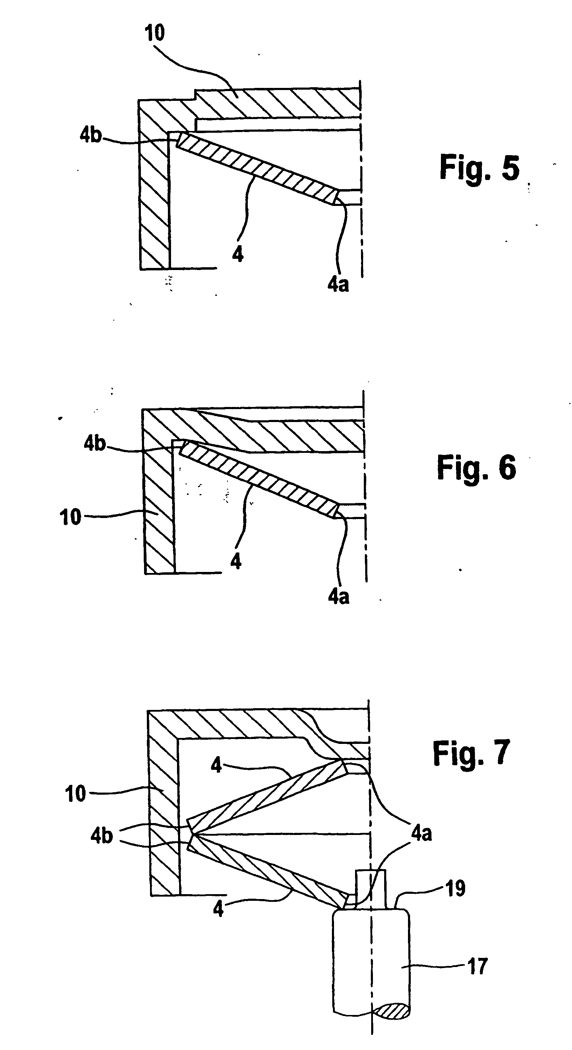

Bezüglich der weiteren Details zur Gestaltung des in Figur 4 vorgeschlagenen kappenförmigen Anschlags 10 wird in den folgenden Figuren 5 bis 7 Bezug genommen.

Die Figur 5 zeigt eine vergrößerte Ansicht des in Figur 4 vorgestellten kappenförmigen Anschlags 10 mit einer nach außen gerichteten Prägung des Anschlagbodens, um zur Mitte des Federelements 4 einen anschlagfreien Federweg zu ermöglichen. Das durch die Öffnung im Federelement 4 charakterisierte erste Federende 4a verharrt somit auch bei maximalem Federhub entfernt vom Anschlagboden, während das durch den Außenrand der Tellerfeder gebildete zweite Federende 4b sich an einer durch die Prägung entstandenen Innenkante abstützt.

In der Figur 6 wird ein kappenförmiger Anschlag 10 gezeigt, dessen Boden zur Beeinflussung der Federcharakterisitk in Richtung des Federelements 4 wannenförmig eingedrückt ist, so dass der Außenbereich des Bodens unter einem definierten Winkel gegenüber der Horizontalen des Bodens geneigt ist, an dem sich das Federelement 4 in gewünschter Weise während des Federhubs anlegen kann.

Die Figur 7 zeigt einen kappenförmigen Anschlag 10, dessen Boden in der Mitte tropfenförmig in Richtung eines Tellerfederpakets eingedrückt ist. Das Tellerfederpaket besteht in vorliegendem Beispiel aus einem paar diametral angeordneten Federelementen 4, die sich mit ihren beiden ersten Federenden 4a am eingedrückten Bodenabschnitt und am Kraftübertragungsglied 17 abstützen, während die zweiten Federenden 4b der beiden Federelemente 4 sich aufeinander abstützen. Die Tiefe des tropfenförmig eingedrückten Bodens entspricht der erforderlichen Vorspannkraft der Federelemente 4, so dass sich nach dem Fixieren des Anschlags 10 am Magnetkern 3 die Charakteristik der Federelemente 4 durch die plastische Deformation des Anschlagbodens exakt einstellen lässt.

Die anhand den Ausführungsbeispielen nach den Figuren 1-7 erläuterte Erfindung führt zu folgenden Vorteilen:
1. hinreichende Gestaltungsfreiheit bezüglich des Luftspalts 16 zwischen Magnetanker 5 und Magnetkern 3,
2. hinreichende Gestaltungsfreiheit bezüglich der Dimensionierung des Federelements 4 zur Anpassung an den Magnetkraftverlauf,
3. keine Beeinflussung des Luftspalts 16 durch das Federelement 4,
4. schmutzunempfindlicher Aufbau und Anordnung des Federelements 4,
5. einfache und exakte mechanische Einstellung des Federelements 4 während des Zusammenbaus bzw. nach dem Zusammenbau der Ventilkomponenten,
6. kein elektronisches Kalibrieren des Spulenstroms unter Zuhilfenahme von aufwendiger Drucksensorik und elektronischen Regelkreisschaltungen erforderlich,
7. Dämpfung von Schwingungen des Ventilstössels 14 bzw. des Magnetankers 3.

Um den Magnetkreis und damit auch die zur Proportionalisierung des Ventilstösselhubs erforderliche Kräftebilanz nicht zu stören, ist das Federelement 4 aus einem den Magnetfluss nicht leitenden Werkstoff, insbesondere einem antimagnetischen Federstahl hergestellt. Zu diesem Zweck ist auch der Ventilstössel 14 vorzugsweise aus einem Kunststoff oder Keramik hergestellt. Keramik erhöht überdies infolge der extrem hohen Verschleißfestigkeit die Standzeit des Ventilschließgliedes 7 im Dauerbetrieb.

Bezüglich des Federelements 4 soll nicht unerwähnt bleiben, dass durchaus Gestaltsabweichungen von der beschriebenen Ausführungsform denkbar sind, ohne hierdurch den Erfindungsgedanken zu verlassen. In einigen der abgebildeten Beispiele weist das Federelement 4 eine Druckausgleichsöffnung auf, die zur Anwendung gelangt, falls der Druckausgleich beiderseits des Federelements 4 nicht schon durch andere, alternative Maßnahmen realisiert ist.

Durch die wirkungsmäßige Überlagerung der progressiven Kennlinie des Federelements 4 mit der linear verlaufenden Kennlinie der Feder 6 wird die Voraussetzung für einen regelungtechnisch einfachen Betrieb eines ursprünglich bistabilen, nunmehr als analog betätigbares Elektromagnetventil geschaffen, wozu durch eine geeignete Anordnung des Federelements 4 im Ventilgehäuse 1 die Federkennlinie des Federelements 4 auf besonders einfache Weise exakt eingestellt werden kann. Wesentlich für die Erfindung ist hierbei die Einhaltung der nachfolgenden technischen Voraussetzung, dass sich das Federelement 4 mit einem seiner beiden Federenden 4a; 4b außerhalb des Luftspalts 16 an einem Anschlag 10 abstützt, der entweder am Ventilgehäuse 1 oder am Magnetkern 3 ausgebildet ist, wobei das vom Anschlag 10 abgewandte andere Federende 4a; 4b dem Hub des Magnetankers 5 entgegenwirken kann.

### Bezugszeichenliste

- 1: Ventilgehäuse
- 2: Absatz
- 3: Magnetkern
- 4: Federelement
- 5: Magnetanker
- 6: Feder
- 7: Ventilschließglied
- 8: Ventilsitz
- 9: Druckmittelkanal
- 10: Anschlag
- 11: Ventilspule
- 12: Jochring
- 13: Plattenfilter
- 14: Ventilstössel
- 15: Ringfilter
- 16: Luftspalt
- 17: Kraftübertragungsglied
- 18: Öffnung
- 19: Stufe

## Patentansprüche

1. Elektromagnetventil, insbesondere für Kraftfahrzeug-Bremsschlupfregelsysteme, mit einem Ventilgehäuse (1), in dem ein Ventilschließglied (7) beweglich geführt ist, das an einem Ventilstössel (14) angebracht ist, der mit einem Magnetanker (5) zusammenwirkt, wobei in Abhängigkeit von der elektromagnetischen Erregung einer am Ventilgehäuse (1) angebrachten Ventilspule (11) der Magnetanker (5) eine Hubbewegung in Richtung eines im Ventilgehäuse (1) angeordneten Magnetkerns (3) vollzieht sowie mit einer Feder (6) mit einer linearen Federkennlinie, die in der elektromagnetisch nicht erregten Ventilstellung den Magnetanker (5) in einem definierten Axialabstand vom Magnetkern (3) positioniert, so dass der Magnetanker (5) vom Magnetkern (3) durch einen Luftspalt getrennt ist, mit einem Federelement (4), welches eine nicht lineare, vorzugsweise progressive Federkennlinie aufweist, welches dem elektromagnetisch initiierten Hub des Magnetankers (5) entgegenwirkt, wobei sich das Federelement (4) mit einem seiner beiden Federenden (4a; 4b) außerhalb des Luftspalts (16) an einem Anschlag (10) abstützt, der entweder am Ventilgehäuse (1) oder am Magnetkern (3) ausgebildet ist, und wobei das vom Anschlag (10) abgewandte andere Federende (4a; 4b) dem Hub des Magnetankers (5) entgegenwirkt, **dadurch gekennzeichnet, dass** zur Einjustierung der Vorspannkraft des Federelements (4) in Richtung der Ventillängsachse der Anschlag (10) variabel einstellbar ist.

2. Elektromagnetventil nach Anspruch 1, **dadurch gekenn** **zeichnet, dass** das erste Federende (4a) am Ventilstössel (14) und das zweite Federende (4b) an einem Anschlag (10) im Ventilgehäuse (1) abgestützt ist (Fig.1, 4).

3. Elektromagnetventil nach Anspruch 2, **dadurch gekennzeichnet, dass** das erste Federende (4a) an einem Absatz (2) des Ventilstössels (14) anliegt, der sich am Ventilstössel (14) entweder als radial erstreckendes Ringteil, als Stösselstufe oder als Ringnut ausgeführt ist (Fig. 1, 4).

4. Elektromagnetventil nach Anspruch 2, **dadurch gekennzeichnet, dass** der Anschlag (10) durch eine in einer Stufenbohrung des Ventilgehäuses (1) verschiebbare Buchse gebildet ist, durch die sich der Ventilstössel (14) mit dem Ventilschließglied (7) koaxial in Richtung auf den Ventilsitz (7) erstreckt (Fig. 1).

5. Elektromagnetventil nach einem der vorangegangenen Ansprüche, **dadurch gekennzeichnet, dass** das Federelement (4) als Ringscheibe ausgeführt ist, deren erstes Federende (4a) durch die in der Ringscheibenmitte gelegene Profilinnenkante und deren zweites Federende (4b) durch die Profilaußenkante entlang dem Ringscheibenumfang gebildet ist (Fig. 1-9).

6. Elektromagnetventil nach Anspruch 5, **dadurch gekennzeichnet, dass** die dem Federelement (4) zugewandte Stirnfläche des Anschlags (10) in Richtung der Ventillängsachse trichterförmig geneigt ist, und dass das Federelement (4) als ebene Federscheibe ausgeführt ist, deren zweites Federende (4b) am erhabenen, äußeren Bereich der Stirnfläche des Anschlags (10) anliegt (Fig. 3).

7. Elektromagnetventil nach einem der vorhergehenden Ansprüche 1 bis 6, **dadurch gekennzeichnet, dass** das Federelement (4) als Tellerfeder ausgeführt ist, deren erstes Federende (4a) als in der Tellerfedermitte gelegene Profilinnenkante am Absatz (2) des Ventilstössels (14) anliegt, und dass sich das zweite Federende (4b) als entlang dem Tellerfederumfang verlaufende Profilaußenkante geneigt auf einer ebenen Stirnfläche des Anschlags (10) abstützt (Fig. 1, 4, 5).

8. Elektromagnetventil nach Anspruch 1, **dadurch gekennzeichnet, dass** ein Boden einer Kappe den Anschlag (10) bildet, der an der vom Magnetanker (5) abgewandten Stirnfläche des Magnetkerns (3) befestigt ist, und dass das Federelement (4) zwischen dem Anschlag (10) und einem Kraftübertragungsglied (17) eingespannt ist, das durch eine Öffnung (18) des rohrförmigen Magnetkerns (3) in den Magnetanker (5) ragt (Fig.5).

9. Elektromagnetventil nach Anspruch 8, **dadurch gekennzeichnet, dass** das Kraftübertragungsglied (17) ein Stösselrohr ist, an dessen einen Ende ein erstes Federende (4a) des Federelements (4) anliegt und dass das vom Federelement (4) abgewandtes Ende des Stösselrohrs in einer Stufenbohrung des rohrförmigen Magnetankers (5) befestigt ist, in der eine Feder 6 befestigt ist, die sich konzentrisch zum Stösselrohr aus der Stufenbohrung hervorstehend am Magnetkern (3) abstützt (Fig. 5).

10. Elektromagnetventil nach Anspruch 8, **dadurch gekennzeichnet, dass** die Vorspannkraft des Federelements (4) durch das Verschieben und/oder Verformen des Deckels eingestellt ist (Fig. 5-8, 9).

11. Elektromagnetventil nach einem der vorangegangenen Ansprüche, **dadurch gekennzeichnet, dass** das Federelement (4) aus einem den Magnetfluss nicht leitenden Werkstoff, insbesondere Federstahl besteht (Fig. 1-9).

12. Elektromagnetventil nach einem der vorangegangenen Ansprüche, **dadurch gekennzeichnet, dass** das Federelement (4) den Ventilstössel (14) gegenüber dem Ventilsitz (8) im Ventilgehäuse (1) zentriert (Fig. 1, 4).

## Claims

1. Electromagnetic valve, in particular for brake slip control systems of motor vehicles, including a valve housing (1) in which a valve closure member (7) is movably guided and is fitted to a valve tappet (14) cooperating with an armature (5) of magnet, wherein depending on the electromagnetic energization of a valve coil (11) fitted to the valve housing (1), the armature (5) performs a stroke movement in the direction of a magnet core (3) arranged in the valve housing (1), and including a spring (6) with a linear spring characteristic curve which, in the electromagnetically non-energized valve piston, positions the armature (5) at a defined axial distance from the magnet core (3) so that the armature (5) is separated from the magnet core (3) by an air slot, including a spring element (4) having a nonlinear, preferably progressive spring characteristic curve and counteracting the electromagnetically initiated stroke of the armature (5), with the spring element (4) with one of its two spring ends (4a; 4b) outside the air slot (16) being supported on a stop (10) which is designed either at the valve housing (1) or at the magnet core (3), and with the other spring end (4a; 4b) remote from the stop (10) counteracting the stroke of the armature (5),
**characterized in that** the stop (10) is variably adjustable for adjusting the preloading force of the spring element (4) in the direction of the valve's longitudinal axis.

2. Electromagnetic valve as claimed in claim 1,
**characterized in that** the first spring end (4a) is supported on the valve tappet (14) and the second spring end (4b) is supported on a stop (10) in the valve housing (1) (Figures 1, 4).

3. Electromagnetic valve as claimed in claim 2,
**characterized in that** the first spring end (4a) bears against a step (2) of the valve tappet (14) which is designed at the valve tappet (14) either as a radially extending annular part, as a step of the tappet, or as an annular groove (Figures 1, 4).

4. Electromagnetic valve as claimed in claim 2,
**characterized in that** the stop (10) is formed by a bushing that is displaceable in a stepped bore of the valve housing (1) and through which the valve tappet (14) with the valve closure member (7) extends coaxially in the direction of the valve seat (7) (Figure 1) .

5. Electromagnetic valve as claimed in any one of the preceding claims,
**characterized in that** the spring element (4) is designed as an annular disc whose first spring end (4a) is formed by the profile inside edge disposed in the middle of the annular disc and whose second spring end (4b) is formed by the profile outside edge along the periphery of the annular disc (Figures 1-9).

6. Electromagnetic valve as claimed in claim 5,
**characterized in that** the end surface of the stop (10) facing the spring element (4) is inclined like a funnel in the direction of the valve's longitudinal axis, and **in that** the spring element (4) is configured as a plane spring washer having its second spring end (4b) abut on the elevated, outside area of the end surface of the stop (10) (Figure 3).

7. Electromagnetic valve as claimed in any one of the preceding claims 1 to 6,
**characterized in that** the spring element (4) is designed as a cup spring whose first spring end (4a), as a profile inside edge disposed in the middle of the cup spring, bears against the step (2) of the valve tappet (14), and **in that** the second spring end (4b), as a profile outside edge extending along the periphery of the cup spring, is supported on a plane end surface of the stop (10) in an inclined fashion (Figures 1, 4, 5).

8. Electromagnetic valve as claimed in claim 1,
**characterized in that** a bottom of a cap forms the stop (10) which is attached to the end surface of the magnet core (3) remote from the armature (5), and **in that** the spring element (4) is compressed between the stop (10) and a force-transmitting element (17) that projects through an opening (18) of the tubular magnetic core (3) into the armature (5) (Figure 5).

9. Electromagnetic valve as claimed in claim 8,
**characterized in that** the force-transmitting element (17) is a tube of tappet, at the one end of which a first spring end (4a) of the spring element (4) is abutting, and **in that** the end of the tube of tappet remote from the spring element (4) is attached in a stepped bore of the tubular armature (5) in which a spring (6) is attached which, concentrically relative to the tube of tappet, projects from the stepped bore and is supported on the magnet core (3) (Figure 5).

10. Electromagnetic valve as claimed in claim 8,
**characterized in that** the preloading force of the spring element (4) is adjusted by the displacement and/or deformation of the cover (Figures 5-8, 9).

11. Electromagnetic valve as claimed in any one of the preceding claims,
**characterized in that** the spring element (4) is composed of a material that is not conducting the magnetic flow, in particular of spring steel (Figures 1-9).

12. Electromagnetic valve as claimed in any one of the preceding claims,
**characterized in that** the spring element (4) centres the valve tappet (14) in relation to the valve seat (8) in the valve housing (1) (Figures 1, 4).

## Revendications

1. Soupape électromagnétique, en particulier pour systèmes de régulation du glissement de freinage de véhicule automobile, comportant un boîtier de soupape (1) dans lequel un obturateur de soupape (7) est guidé déplaçable lequel est placé sur un poussoir de soupape (14) qui coopère avec une palette magnétique mobile (5), la palette magnétique mobile (5) exécutant un mouvement de levage en direction d'un noyau magnétique (3) disposé dans le boîtier de soupape (1), en fonction de l'excitation électromagnétique d'une bobine de soupape (11) placée sur le boîtier de soupape (1), et comportant un ressort (6) avec une caractéristique linéaire, qui dans la position non excitée électromagnétiquement de la soupape, positionne la palette magnétique mobile (5) à une distance axiale définie du noyau magnétique (3), ce qui fait que la palette magnétique mobile (5) est séparée du noyau magnétique (3) par un entrefer, comportant un élément à ressort (4) qui présente une caractéristique non linéaire, de préférence progressive, et qui s'oppose à la course, initialisée de manière électromagnétique, de la palette magnétique mobile (5), l'élément à ressort (4) prenant appui, par l'une de ses deux extrémités (4a ; 4b), à l'extérieur de l'entrefer (16), contre une butée (10) qui est réalisée soit sur le boîtier de soupape (1), soit sur le noyau magnétique (3), et l'autre extrémité (4a ; 4b) du ressort, tournée à l'opposé de la butée (10), s'opposant à la course de la palette magnétique mobile (5), **caractérisée en ce que** pour ajuster la force de précontrainte de l'élément à ressort (4) dans la direction de l'axe longitudinal de la soupape, la butée (10) est réglable de manière variable.

2. Soupape électromagnétique selon la revendication 1, **caractérisée en ce que** la première extrémité de ressort (4a) prend appui contre le poussoir de soupape (14) et la deuxième extrémité de ressort (4b) contre une butée (10) dans le boîtier de soupape (1) (fig. 1, 4).

3. Soupape électromagnétique selon la revendication 2, **caractérisée en ce que** la première extrémité de ressort (4a) s'applique contre un décrochement (2) du poussoir de soupape (14) qui est réalisé sur le poussoir de soupape (14), soit comme pièce annulaire s'étendant radialement, comme gradin de poussoir, soit comme rainure annulaire (fig. 1, 4).

4. Soupape électromagnétique selon la revendication 2, **caractérisée en ce que** la butée (10) est formée par une douille pouvant coulisser dans un perçage étagé du boîtier de soupape (1), à travers laquelle le poussoir de soupape (14) s'étend coaxialement avec l'obturateur de soupape (7) en direction du siège de soupape (7) (fig. 1).

5. Soupape électromagnétique selon l'une des revendications précédentes, **caractérisée en ce que** l'élément à ressort (4) est réalisé comme disque annulaire dont la première extrémité de ressort (4a) est formée par le bord intérieur profilé placé au milieu du disque annulaire, et dont la deuxième extrémité de ressort (4b) est formée par le bord extérieur profilé le long du pourtour du disque annulaire (fig. 1 à 9).

6. Soupape électromagnétique selon la revendication 5, **caractérisée en ce que** la face frontale, tournée vers l'élément à ressort (4), de la butée (10), est inclinée en forme d'entonnoir en direction de l'axe longitudinal de la soupape, et **en ce que** l'élément à ressort (4) est réalisé comme rondelle élastique plane dont la deuxième extrémité de ressort (4b) s'applique contre la zone extérieure en relief de la face frontale de la butée (10) (fig. 3).

7. Soupape électromagnétique selon l'une des revendications 1 à 6 précédentes, **caractérisée en ce que** l'élément à ressort (4) est réalisé comme ressort Belleville dont la première extrémité de ressort (4a) s'applique, en tant que bord intérieur profilé situé au milieu du ressort Belleville, contre le décrochement (2) du poussoir de soupape (14), et **en ce que** la deuxième extrémité de ressort (4b), en tant que bord extérieur profilé s'étendant le long du pourtour du ressort Belleville, prend appui, de manière inclinée, sur une face frontale plane de la butée (10) (fig. 1, 4, 5).

8. Soupape électromagnétique selon la revendication 1, **caractérisée en ce qu'**un fond d'un capuchon forme la butée (10) qui est fixée sur la face frontale du noyau magnétique (3), tournée à l'opposé de la palette magnétique mobile (5), et **en ce que** l'élément à ressort (4) est serré entre la butée (10) et un organe de transmission des forces (17) lequel traverse une ouverture (18) du noyau magnétique (3) de forme tubulaire dans la palette magnétique mobile (5) (fig. 5).

9. Soupape électromagnétique selon la revendication 8, **caractérisée en ce que** l'organe de transmission des forces (17) est un tube de poussoir à une extrémité duquel s'applique une première extrémité de ressort (4a) de l'élément à ressort (4) et **en ce que** l'extrémité, opposée à l'élément à ressort (4), du tube de poussoir, est fixée dans un perçage étagé de la palette magnétique mobile (5) de forme tubulaire, dans lequel est fixé un ressort (6) qui prend appui contre le noyau magnétique (3), concentriquement au tube de poussoir, en dépassant du perçage étagé (fig. 5).

10. Soupape électromagnétique selon la revendication 8, **caractérisée en ce que** la force de précontrainte de l'élément à ressort (4) est réglée par le coulissement et/ou la déformation du couvercle (fig. 5 à 8, 9).

11. Soupape électromagnétique selon l'une des revendications précédentes, **caractérisée en ce que** l'élément à ressort (4) est constitué d'un matériau ne conduisant pas le flux magnétique, en particulier un acier à ressort (fig. 1 à 9).

12. Soupape électromagnétique selon l'une des revendications précédentes, **caractérisée en ce que** l'élément à ressort (4) centre le poussoir de soupape (14) par rapport au siège de soupape (8) dans le boîtier de soupape (1) (fig. 1, 4).
